# EUROPÄISCHE PATENTANMELDUNG

(11) **EP 1 640 860 A1**
(43) Veröffentlichungstag der Anmeldung: **29.03.2006**
(21) Anmeldenummer: 04022805.8
(22) Anmeldetag: 24.09.2004
(51) Int. Cl.: G06F 9/46

(54) **Verfahren zum Zugriff auf Inventardaten und Vorrichtung**

(71) Anmelder: SIEMENS AKTIENGESELLSCHAFT, 80333 München (DE)
(72) Erfinder: Berndt, Stefan, 59199 Bönen (DE); Hanna, Thomas, 32758 Detmold (DE); Laux, Thorsten, 33104 Paderborn (DE); Scheering, Christian, Dr., 33689 Bielefeld (DE)

(57) **Zusammenfassung**

Erläutert wird unter anderem ein Verfahren, bei dem in einem Peer-to-Peer-Netzwerk auf Inventardaten (IA bis ID) zugegriffen wird, die gemäß einer gleichen Datenbeschreibungssprache erzeugt worden sind. Es entsteht ein einfaches, sicheres und leistungsfähiges Verfahren zum Zugriff auf Inventardaten in heterogenen Datenübertragungsnetzen.

## Beschreibung

Die Erfindung betrifft ein Verfahren zum Zugriff auf Inventardaten. Inventardaten sind Daten, die die Konfiguration einer Datenverarbeitungsanlage beschreiben. Die Hardwarekonfigurationen betrifft in der Datenverarbeitungsanlage vorhandene Schaltungseinheiten und deren Eigenschaften. Bei der Software sind Inventardaten insbesondere solche Daten, die angeben, ob eine bestimmte Software vorhanden ist. Bei Software wird in den Invertardaten insbesondere erfasst, wo eine Datei gespeichert ist, wie diese Datei heißt und in welcher Version diese Datei vorliegt. Die Datenverarbeitungsanlagen haben jeweils eine eigene Speichereinheit, beispielsweise einen Festwertspeicher, wie eine Festplatte, oder einen Daten flüchtig speichernden Speicher, wie z.B. ein RAM (Random Access Memory).

Der manuelle Aufwand zum Erzeugen und Verwalten von Inventardaten bzw. zum Erstellen von Programmen für den Zugriff auf Inventardaten ist sehr hoch.

Außerdem werden in einem Datenübertragungsnetz oft auch Datenverarbeitungsanlagen mit voneinander verschiedenen Betriebssystemen betrieben, beispielsweise mit dem Betriebssystem Windows und mit dem Betriebssystem UNIX. Auf Grund der Anforderungen des jeweiligen Betriebssystems unterscheidet sich die Struktur der Konfigurationsdaten. Soll bspw. auf Inventardaten von Datenverarbeitungsanlagen mit verschiedenen Betriebssystemen zugegriffen werden, so ist eine noch aufwendigere Spezialsoftware erforderlich.

Es ist Aufgabe der Erfindung, ein einfaches Verfahren zum Zugriff auf Inventardaten anzugeben, bei dem insbesondere der manuelle Aufwand für die Bedienung gering ist. Außerdem soll eine Vorrichtung angegeben werden, mit der sich das Verfahren durchführen lässt.

Die auf das Verfahren bezogene Aufgabe wird durch die im Patentanspruch 1 angegebenen Verfahrensschritte gelöst. Weiterbildungen sind in den Unteransprüchen angegeben.

Bei dem erfindungsgemäßen Verfahren werden die folgenden Schritte ausgeführt:
- Inbetriebnahme mehrerer Datenverarbeitungsanlagen, die bspw. jeweils eine eigene Speichereinheit haben, wobei bei einer Ausgestaltung mindestens zwei Datenverarbeitungsanlagen voneinander verschiedene Betriebssysteme haben. So gibt es bspw. im Verbund mehr als 5 oder mehr als 10 verschiedene Betriebssysteme. Bei einer alternativen Ausgestaltung sind nur identische Betriebssysteme auf den Datenverarbeitungsanlagen des Verbundes installiert.
- Für die Datenverarbeitungsanlagen jeweils Speichern von Inventardaten in der Speichereinheit der Datenverarbeitungsanlage, wobei die Inventardaten die jeweilige Datenverarbeitungsanlage beschreiben und wobei die Inventardaten die Datenverarbeitungsanlagen auf die gleiche Art und Weise beschreiben,
- Betreiben der Datenverarbeitungsanlagen in einem Verbund gemäß einer Verbundbetriebsart, die für die Datenverarbeitungsanlagen des Verbunds insbesondere jeweils einen Zugriff auf die Inventardaten einer beliebigen anderen Datenverarbeitungsanlage des Verbundes ermöglicht,
- Anfordern von Inventardaten mindestens einer Datenverarbeitungsanlage des Verbundes,
- Übertragen der angeforderten Inventardaten gemäß der Verbundbetriebsart über ein Datenübertragungsnetz,
- Ausgeben der übertragenen Inventardaten.

So werden mehr als zehn, mehr als 100 oder sogar mehr als 1000 Inventardatensätze in das erfindungsgemäße Verfahren einbezogen. Auf einer Datenverarbeitungsanlage können auch für verschiedene Anwendungen mehrere Inventardatensätze gespeichert sein. Damit wird das Verfahren insbesondere bei mehr als zehn bzw. bei mehr als 100 Datenverarbeitungsanlagen in dem Verbund eingesetzt.

Damit auf die Inventardaten auf einfache Art und insbesondere unabhängig von dem Betriebssystem zugegriffen werden kann, werden die Inventardaten auf die gleiche Art und Weise beschrieben. Das bedeutet, dass die Inventardaten gleiche Anforderungen an ihre Struktur erfüllen. Insbesondere erfüllen alle Inventardaten die formalen Vorgaben einer Datenbeschreibungssprache, insbesondere einer Seitenbeschreibungssprache, die die Darstellung von Text beschreibt, wie z.B. die Sprache XML (Extensible Markup Language).

Die Datenverarbeitungsanlagen werden in einem Verbund gemäß der Verbundbetriebsart betrieben. Im Gegensatz zu einem Client-Server-Betrieb sind die Datenverarbeitungsanlagen des Verbundes bezüglich des Zugriffs auf die Inventardaten anderer Datenverarbeitungsanlagen des Verbundes untereinander gleichberechtigt. Ein Beispiel für eine Verbundbetriebsart ist die sogenannte Peer-to-Peer-Betriebsart.

Aufgrund der Verwendung einer solchen Verbundbetriebsart ist keine zentrale Verwaltung erforderlich. Durch die dezentrale Speicherung der Invertardaten ist ein Missbrauch der Inventardaten erschwert. Außerdem ist kein zentrales Verwaltungsprogramm erforderlich, das nur mit großem Aufwand zu realisieren ist, und mit dessen Hilfe Inventardaten in ein Inventardatenverzeichnis einzugliedern wären.

Bei einer nächsten Weiterbildung werden die Inventardaten auf den Datenverarbeitungsanlagen lokal durch lokale Inventardatensammelprogramme zusammengestellt, so dass sich auf jeder Datenverarbeitungsanlage ein eigenes Inventardatensammelprogramm befindet. Bei einer Ausgestaltung werden die Inventardaten von dem Inventardatensammelprogramm in ihrem Format umgewandelt, bspw. von einem Betriebssystem spezifischen Format in das einheitliche Format. Alternativ sind die Inventardaten bereits vor dem Sammeln in dem einheitlichen Format gespeichert, z.B. in XML. Die Sammelprogramme werden bei einer Ausgestaltung automatisch gestartet und sind bspw. sogenannte Hintergrundprogramme, die das Installieren von neuer Hardware oder Software automatisch erfassen und mit dem Sammeln der Inventardaten automatisch beginnen. Somit ist keine manuelle Eingabe zum Erstellen der Inventardaten erforderlich. Die Inventardaten in der einheitlichen Sprache werden bei einer nächsten Ausgestaltung vom Hersteller der Hardware oder der Software in dem einheitlichen Format vorgegeben. Damit brauchen die Inventardaten beim Sammeln nicht umgewandelt werden. Jedoch ist auch eine Kombination möglich, bei der das Inventardatensammelprogramm zuerst versucht wird die Inventardaten selbst zu sammeln und in das einheitliche Format umzuwandeln. Erst wenn dies scheitert wird auf die vom Hersteller vorgegebenen Daten zurückgegriffen.

Demzufolge ist bei dem erfindungsgemäßen Verfahren und insbesondere bei der Weiterbildung auch kein manueller Aufwand einer Bedienperson für das Einfügen von Inventardaten oder das Löschen von Inventardaten aus einem Inventardatenverzeichnis erforderlich. Aufgrund dieser einfachen Vorgehensweise ergibt sich ein einfaches Verfahren, in das eine sehr große Anzahl von Datenverarbeitungsanlagen einbezogen werden kann, wobei auch eine große Sicherheit gegen Missbrauch besteht.

Die über das Datenübertragungsnetz angeforderten und übertragenen Inventardaten werden insbesondere auf einem Bildschirm mit Hilfe eines Datensichtprogramms ausgegeben. Insbesondere mit einem Datensichtprogramm, das auch die Navigation in dem Datenübertragungsnetz ermöglicht, d.h. mit einem sogenannten Browser. Alternativ oder zusätzlich werden die übertragenen Inventardaten auch in einer Datei gespeichert oder auf andere Art und Weise ausgegeben, z.B. auf einem Drucker.

Bei einer Weiterbildung des erfindungsgemäßen Verfahrens ist die Verbundbetriebsart eine Peer-to-Peer-Betriebsart. In dieser Betriebsart wird beim Eingliedern einer Datenverarbeitungsanlage in den Verbund gemäß der Verbundbetriebsart eine Anfragenachricht an mehrere Datenverarbeitungsanlagen des Datenübertragungsnetzes gesendet. Die Anfragenachricht enthält ein Typdatum, das auf eine Datenverarbeitungsanlage mit Inventardaten hinweist. Das Typdatum ist also ein Datum, an dem sich die Datenverarbeitungsanlagen des Verbundes erkennen können.

Die Anfragenachricht wird insbesondere an alle Datenverarbeitungsanlagen des Übertragungsnetzes bzw. an alle Datenverarbeitungsanlagen eines Teilnetzes des Datenübertragungsnetzes gesendet. Bei einer Ausgestaltung wird die Anfragenachricht von mindestens einer Datenverarbeitungsanlage empfangen und bearbeitet, die nicht zu dem Verbund gehört. Auch diese Datenverarbeitungsanlage prüft die Anfragenachricht. Jedoch ist das Prüfergebnis negativ, so dass auf die Anfragenachricht von dieser Datenverarbeitungsanlage nicht geantwortet wird, weil diese Datenverarbeitungsanlage nicht zu dem Verbund gehört. Diese Datenverarbeitungsanlage bearbeitet die Anfragenachricht nicht bzw. leitet sie unbearbeitet weiter.

Beim Versenden der Anfragenachricht wird in einem Adressfeld beispielsweise ein Kennzeichen für "alle" angegeben, d.h. nach Art einer Rundfrage bzw. nach Art des sogenannten ALOHA-Verfahrens. Die die Anfragenachricht ursprünglich erzeugende Datenverarbeitungsanlage wartet auf eine Antwort. Es antworten mit Antwortnachrichten nur die Datenverarbeitungsanlagen, auf denen Inventardaten gespeichert sind und die schon zu dem Verbund gehören. Die Antwortnachrichten enthalten Kennzeichen der antwortenden Datenverarbeitungsanlagen, z.B. in der Absenderadresse. Beim Eintreffen von Antwortnachrichten in der die ursprüngliche Anfragenachricht erzeugenden Datenverarbeitungsanlage werden in dieser Datenverarbeitungsanlage die Kennzeichen aller antwortenden Datenverarbeitungsanlagen vermerkt oder es wird nur ein Teil dieser Datenverarbeitungsanlagen vermerkt, mindestens jedoch eine Datenverarbeitungsanlage. Beim Aufbau einer redundanten Ringstruktur in dem Verbund werden bspw. mindestens zwei Datenverarbeitungsanlagen vermerkt, nämlich der linke und der rechte Nachbar gemäß der Ringstruktur, so dass zwei Übertragungsrichtungen möglich sind. Bei noch stärker fehlerredundanter Ringstruktur werden mindestens vier Datenverarbeitungsanlagen vermerkt, wobei jeweils noch der linke übernächste Nachbar und der rechte übernächste Nachbar vermerkt werden. Über die Ringstruktur sind alle Inventardaten abrufbar.

Bei einer nächsten Weiterbildung des erfindungsgemäßen Verfahrens können die Invertardaten im Rahmen des erfindungsgemäßen Verfahrens nicht geändert werden. Bspw. wird das Ändern der Inventardaten, die als Kopiervorlage für die übertragenen Inventardaten dienten, verhindert. Das Ändern dieser Daten wird beispielsweise dadurch verhindert, dass das Datensichtprogramm keine Funktion enthält, die den Zugriff auf die Inventardaten in Speichereinheiten anderer Datenverarbeitungsanlagen ermöglicht. Durch diese Vorgehensweise lässt sich das Verfahren sehr einfach halten bzw. wird es auch erst möglich. So müssen keine Zugriffsrechte verwaltet und geprüft werden. Außerdem muss weniger Aufwand für Sicherheitsaspekte gegen Missbrauch bei gleichem Sicherheitsniveau betrieben werden. Insbesondere lassen sich also durch diese Vorgehensweise sehr viele Inventardatensätze bzw. sehr viele unterschiedliche Datenverarbeitungsanlagen einbeziehen. Ein Missbrauch beschränkt sich lediglich auf das unbefugte Lesen von Inventardaten. Ein unbefugtes Schreiben von Inventardaten ist jedoch nicht möglich. Die grundlegende Intention von Inventory ist bei dieser Weiterbildung lediglich das LESEN von Daten und NIE das manipulieren.

Bei einer alternativen Weiterbildung werden nur ausgewählte Inventardaten angefordert. Demzufolge lässt sich die Menge der zu übertragenden Daten klein halten. Es müssen nicht alle Inventardaten bzw. Inventardatensätze übertragen und angezeigt werden. So gibt es beispielsweise mindestens eine Datenverarbeitungsanlage des Verbundes, deren Inventardaten nicht angefordert werden bzw. mindestens einen Inventarsatz auf einer Datenverarbeitungsanlage des Verbundes, der nicht angefordert wird.

Alternativ werden jedoch bei einer nächsten Weiterbildung alle Inventardaten angefordert, die auf den Datenverarbeitungsanlagen des Verbundes gespeichert sind. Damit lässt sich auf einfache Art eine Gesamtübersicht über alle Inventardaten erstellen, insbesondere automatisch.

Die Datenverarbeitungsanlage, an der die Inventardaten ausgegeben werden, gehört bei einer Ausgestaltung zu dem Verbund, d.h. auch diese Datenverarbeitungsanlage speichert auch eigene Inventardaten, die angezeigt werden können. Bei einer alternativen Ausgestaltung gehört die Datenverarbeitungsanlage, an der die Daten ausgegeben werden, nicht zum Verbund, beispielsweise wenn sie ein tragbarer Rechner eines Servicetechnikers ist.

Falls die Datenverarbeitungsanlage, an der die Inventardaten ausgegeben werden, zu dem Verbund gehört, sind bei einer nächsten Ausgestaltung Kennzeichen für alle Datenverarbeitungsanlagen des Verbundes in ihrer Speichereinheit gespeichert. Somit ist die Datenverarbeitungsanlage, an der die Daten angezeigt werden, auch der sogenannte Superknoten (supernode) des Peer-to-Peer-Netzes. Alternativ ist jedoch eine andere Datenverarbeitungsanlage des Verbundes der Superknoten und die Kennzeichen für alle Datenverarbeitungsanlagen werden bspw. von dieser anderen Datenverarbeitungsanlage angefordert und zu der Datenverarbeitungsanlage übertragen, an der die Inventardaten ausgegeben werden sollen.

Bei einer Weiterbildung des erfindungsgemäßen Verfahrens ist die Art und Weise der Beschreibung der Inventardaten gemäß einer erweiterbaren Datenbeschreibungssprache vorgegeben, insbesondere gemäß einer Seitenbeschreibungssprache, wie der Sprache XML (Extensible Markup Language) oder SGML (Standard Generalized Markup Language). Insbesondere die Sprache XML ist im Internet sehr weit verbreitet und auf fast jedem Rechner ist ein Browserprogramm dafür vorhanden. Die Erweiterbarkeit der Sprache ermöglicht eine einfache Anpassung an zusätzliche Datenstrukturen ohne dass das Datensichtprogramm geändert werden müsste. Die Vorgaben für die Inventardaten lassen sich auch durch Dritte auf einfache Art einhalten, da die erweiterbare Datenbeschreibungssprache es ermöglicht, die Vorgaben so zu formulieren, dass sie automatisch geprüft werden können. Beispielsweise wird bei der Sprache XML eine Prüfung mit Hilfe einer DTD-Datei (Document Type Description) bzw. mit Hilfe eines XML-Schemas ermöglicht. Die zugehörigen Dateiendungen für diese Dateien sind ".dtd" bzw. ".xsd".

Neben den erwähnten Sprachen lässt sich aber beispielsweise auch ein CSV-Verfahren (Comma Separated Value) einsetzen. Auch andere Verfahren zur einheitlichen Beschreibung der Strukturierung der Inventardaten werden verwendet.

Bei einer nächsten Weiterbildung prüft ein Parserprogramm die Inventardaten einer Datenverarbeitungsanlage oder aller Datenverarbeitungsanlagen des Verbundes auf die Einhaltung der Vorgaben hin. Die Prüfung wird bei einer Ausgestaltung vom Empfänger durchgeführt, da die Informationen ja ansonsten auf dem Weg noch verändert werden könnten. Die Prüfung bei Datenausgang wäre ein weiteres Ausprägungsbeispiel. Die Überprüfung lässt sich auf einfache Art und Weise durchführen, wenn die genannten Vorgabe-Dateien ".dtd" bzw. ".xsd" verwendet werden, da die weit verbreiteten Datensichtprogramme Parser für solche Dateien enthalten.

Das Parserprogramm verwendet bei der Prüfung die Vorgabedatei. Bei Erweiterungen der Vorgaben werden nur die Vorgabedateien angepasst, so dass sich auch neu erstellte Inventardaten auf einfache Art prüfen lassen.

Bei einer nächsten Weiterbildung ist mindestens eine Datenverarbeitungsanlage des Verbundes ein Personalcomputer, d.h. ein Computer mit einem Prozessor, einem Festwertspeicher, einem Bildschirm, einer Tastatur und einem Arbeitsspeicher, wie er sich für sehr viele Anwendungen einsetzen lässt, insbesondere für Textprogramme, Tabellenkalkulationsprogramme, Grafikprogramme. Der Personalcomputer enthält insbesondere keine Spezialhardware für spezielle Anwendungen.

Mindestens eine andere Datenverarbeitungsanlage des Verbundes ist bei der Weiterbildung eine Telekommunikationsanlage eines durchschaltevermittelten Datenübertragungsnetzes, z.B. eine Telekommunikationsanlage vom Typ "HiCom" der Firma Siemens AG oder vom Typ "HiPath 3000/5000" der Firma Siemens AG bzw. eine Telekommunikationsanlage eines anderen Herstellers. Alternativ oder zusätzlich gibt es auch eine Datenverarbeitungsanlage in dem Verbund, die eine Vermittlungsstelle eines durchschaltevermittelten Datenübertragungsnetzes ist. Zusätzlich oder alternativ gibt es eine Datenverarbeitungsanlage, die eine Netzzugangseinheit eines Datenpaketübertragungsnetzes ist, d.h. ein sogenannter Gatekeeper. Auch Netzübergangseinheiten bzw. "Gateways" werden in den Verbund einbezogen. Die genannten Datenverarbeitungsanlagen haben voneinander verschiedene Betriebssysteme bzw. sogenannte Firmware. Dennoch lassen sich aufgrund des erfindungsgemäßen Verfahrens die Inventardaten mit einem einheitlichen Verfahren verwalten. Die heterogene Netzstruktur ist damit kein Hindernis mehr für die Durchführung eines einfachen Inventarisierungsverfahrens.

Die Erfindung betrifft außerdem eine Vorrichtung zum Zugriff auf Inventardaten, mit der sich insbesondere das erfindungsgemäße Verfahren oder eine seiner Weiterbildungen durchführen lässt. Damit gelten die oben genannten technischen Wirkungen auch für die erfindungsgemäße Vorrichtung.

Im Folgenden werden Ausführungsbeispiele der Erfindung an Hand der beiliegenden Zeichnungen erläutert. Darin zeigen:
- Figur 1: einen Verbund aus fünf Datenverarbeitungsanlagen,
- Figur 2: den Verbund gemäß Figur 1 nach der Eingliederung einer sechsten Datenverarbeitungsanlage, und
- Figur 3: Funktionseinheiten einer Datenverarbeitungsanlage, die zur Anzeige der Inventardaten verwendet wird.

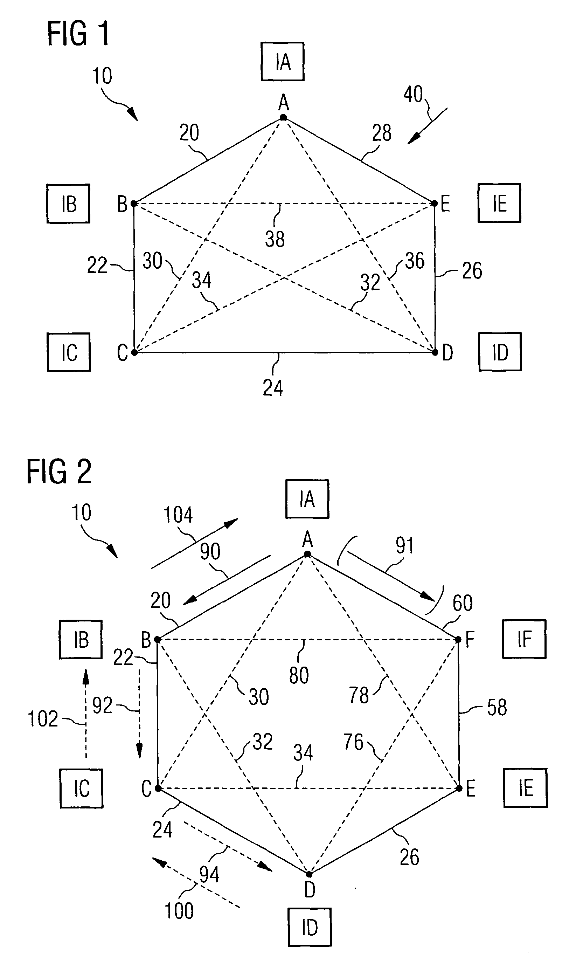

Figur 1 zeigt einen Verbund 10 aus fünf Datenverarbeitungsanlagen A bis E. Die in Figur 1 dargestellte Topologie ist nur ein Beispiel für die Realisierung eines Peer-to-Peer-Netzwerks. Die Datenverarbeitungsanlagen A bis E sind in ihrer alphabetischen Reihenfolge gemäß einer Ringstruktur verknüpft, siehe Datenübertragungsverbindungen 20 bis 28, die insbesondere auf höheren Protokollebenen eines Datenpaket-übertragungsnetzes bestehen, insbesondere eines Datenpaket-übertragungsnetzes, das gemäß Internetprotokoll arbeitet, beispielsweise das Internet.

Zur zusätzlichen Absicherung der Ringstruktur in dem Verbund 10 können zusätzliche Hilfsdatenübertragungsverbindungen 30 bis 38 zwischen zwei Knoten aufgebaut werden, wobei genau ein Knoten in der Ringstruktur umgangen wird. Beispielsweise lässt sich eine Datenübertragungsverbindung 20 zwischen dem Netzknoten A und dem Netzknoten B aufbauen. Zwischen dem Netzknoten B und dem Netzknoten C lässt sich eine Datenübertragungsverbindung 22 aufbauen. Unter Umgehung des Netzknotens B lässt sich zwischen dem Netzknoten A und dem Netzknoten C die Hilfsdatenübertragungsverbindung 30 aufbauen.

Jeder Netzknoten des Verbundes 10 speichert Inventardaten. So speichern die Netzknoten A bis E gemäß ihrer alphabetischen Reihenfolge in dieser Reihenfolge Inventardaten IA, IB bis IE. Die Inventardaten IA bis IE sind jeweils in einem lokalen Speicher des jeweiligen Netzknotens A bis E gespeichert. Alternativ sind die Inventardaten in einer externen Speichereinheit gespeichert, auf die der jeweilige Netzknoten A bis E jedoch Zugriff hat.

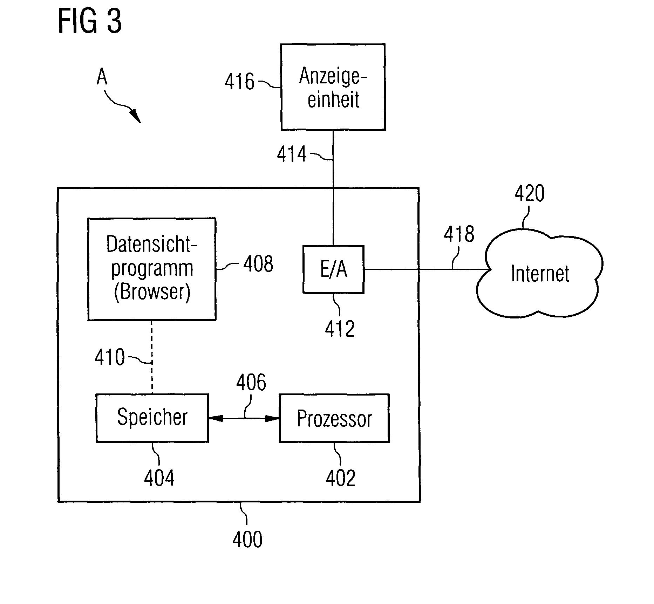

Im Ausführungsbeispiel ist der Netzknoten A ein Rechner, dessen Aufbau unten an Hand der Figur 3 noch näher erläutert wird. In den Inventardaten IA ist beispielsweise der Name des Rechners, dessen Hardwarekonfiguration, dessen Softwarekonfiguration und dessen Internetadresse vermerkt.

Die Netzknoten B, D und E sind im Ausführungsbeispiel ebenfalls einfache Rechner, auf denen jedoch Hilfsprogramme gespeichert sind, die beim Betrieb des Netzknotens C benötigt werden. In den Inventardaten IB, ID, IE sind ähnliche Angaben enthalten, wie in den Inventardaten IA. Ein Beispiel für die Syntax und den Inhalt der Inventardaten IB wird unten an Hand von XML-Daten näher erläutert.

Im Ausführungsbeispiel ist der Netzknoten C eine Telekommunikationsanlage vom Typ "HiPath 3000" der Firma Siemens AG. Ein Beispiel für die Syntax und den Inhalt der Inventardaten IC wird unten an Hand von XML-Daten näher erläutert.

Figur 2 zeigt den Verbund 10 nach dem Eingliedern einer sechsten Datenverarbeitungsanlage bzw. eines sechsten Netzknotens F, auf dem Inventardaten IF gespeichert sind. Der Netzknoten F wird an einer Position zwischen den Netzknoten A und E in die Ringstruktur des Verbundes 10 eingefügt, siehe Pfeil 40 in Figur 1. Damit bleibt die Ringstruktur zwischen den Netzknoten A, B, C, D und E unverändert, siehe Datenübertragungsverbindungen 20, 22, 24 und 26. Jedoch wird die Datenübertragungsverbindung 28 zwischen dem Netzknoten A und dem Netzknoten E durch eine Datenübertragungsverbindung 58 zwischen dem Netzknoten F und dem Netzknoten E sowie durch eine Datenübertragungsverbindung 60 zwischen dem Netzknoten A und dem Netzknoten F ersetzt.

Die Hilfsdatenübertragungsverbindungen 30, 33 und 34 lassen sich auch nach dem Eingliedern des Netzknotens F weiter nutzen. Jedoch werden an Stelle der Hilfsdatenübertragungsverbindungen 36 und 38 Hilfsdatenübertragungsverbindungen 76, 78 und 80 verwendet. Die Hilfsdatenübertragungsverbindung 76 verbindet die Netzknoten D und F unter Umgehung des Netzknotens E. Die Hilfsdatenübertragungsverbindung 78 verbindet die Netzknoten E und A unter Umgehung des Netzknotens F. Die Hilfsdatenübertragungsverbindung 80 verbindet den Netzknoten B und den Netzknoten F unter Umgehung des Netzknotens A.

Wie aus Figur 2 ersichtlich ist, kann der Netzknoten A nun nicht mehr alle Netzknoten B bis F des Verbundes 10 über Datenübertragungsverbindungen bzw. über Hilfsdatenübertragungsverbindungen direkt erreichen. Es liegt ein nicht vollständig vermaschter Verbund vor, der jedoch hinsichtlich des Verwaltungsaufwandes Vorteile bietet. Jedoch kann auf die Inventardaten IA bis IF von jedem Netzknoten A bis F des Verbundes 10 zumindest indirekt zugegriffen werden. Will der Netzknoten A beispielsweise auf die Inventardaten ID zugreifen, so sendet er eine Anforderungsnachricht 90 an seinen rechten Nachbarn gemäß Ringstruktur, d.h. den Netzknoten B, und gegebenenfalls eine Anforderungsnachricht 91 an seinen linken Netzknoten F. Das Erzeugen bzw. die Bearbeitung der Anforderungsnachricht 91 hängt von den gewählten Abfragestrategien ab und wird im Folgenden deshalb nicht mehr näher erläutert. Der Netzknoten B erzeugt aufgrund der Anforderungsnachricht 90 eine Anforderungsnachricht 92 an seinen rechten Nachbarn, d.h. den Netzknoten C. Der Netzknoten C erzeugt aufgrund der Anforderungsnachricht 92 eine Anforderungsnachricht 94 an seinen rechten Netzknoten D. Der Netzknoten D erzeugt aufgrund der Anforderungsnachricht 94 eine Antwortnachricht 100, die eine Kopie der Inventardaten ID enthält, und sendet die Antwortnachricht an den Sender der Anforderungsnachricht 94 zurück, d.h. an den Netzknoten C. Aufgrund der Antwortnachricht 100 erzeugt der Netzknoten C eine Antwortnachricht 102, in der ebenfalls die Inventardaten ID bzw. eine Kopie dieser Daten vorhanden ist. Die Antwortnachricht 102 wird vom Netzknoten C an den Netzknoten B, d.h. an seinen linken Nachbarn gesendet. Im Netzknoten B wird aufgrund der Antwortnachricht 102 eine Antwortnachricht 104 für den Netzknoten A erzeugt. Die Antwortnachricht 104 enthält ebenfalls eine Kopie der Inventardaten ID. Damit stehen beim Empfang der Antwortnachricht 104 im Netzknoten A die Inventardaten ID zur Anzeige zur Verfügung.

Das erläuterte Verfahren ist eine Art eines Peer-to-Peer-Verfahrens. Auch das Eingliedern des Netzknotens F erfolgt nach einem Peer-to-Peer-Verfahren, insbesondere nach dem in der Einleitung erläuterten Verfahren, bei dem der Netzknoten F an alle Datenverarbeitungsanlagen eines Netzes eine Anfragenachricht sendet. Antwortnachrichten kommen im Ausführungsbeispiel gemäß Figur 2 von den Netzknoten A bis E. Netzknoten, die jedoch keine Inventardaten speichern, senden keine Antwortnachricht an den Netzknoten F zurück.

Im Folgenden wird ein Beispiel für eine XML-Schema Datei angegeben, wobei Erläuterungen in den Datenfeldern bzw. Tags "documentation" eingefügt sind:

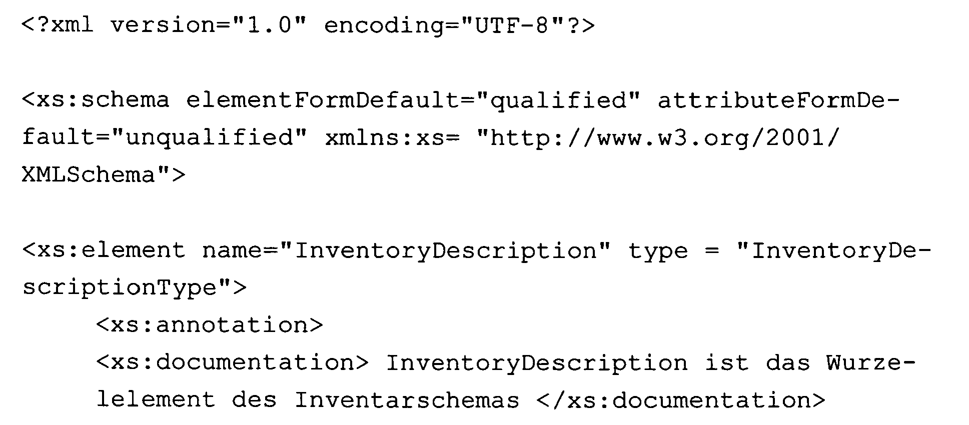

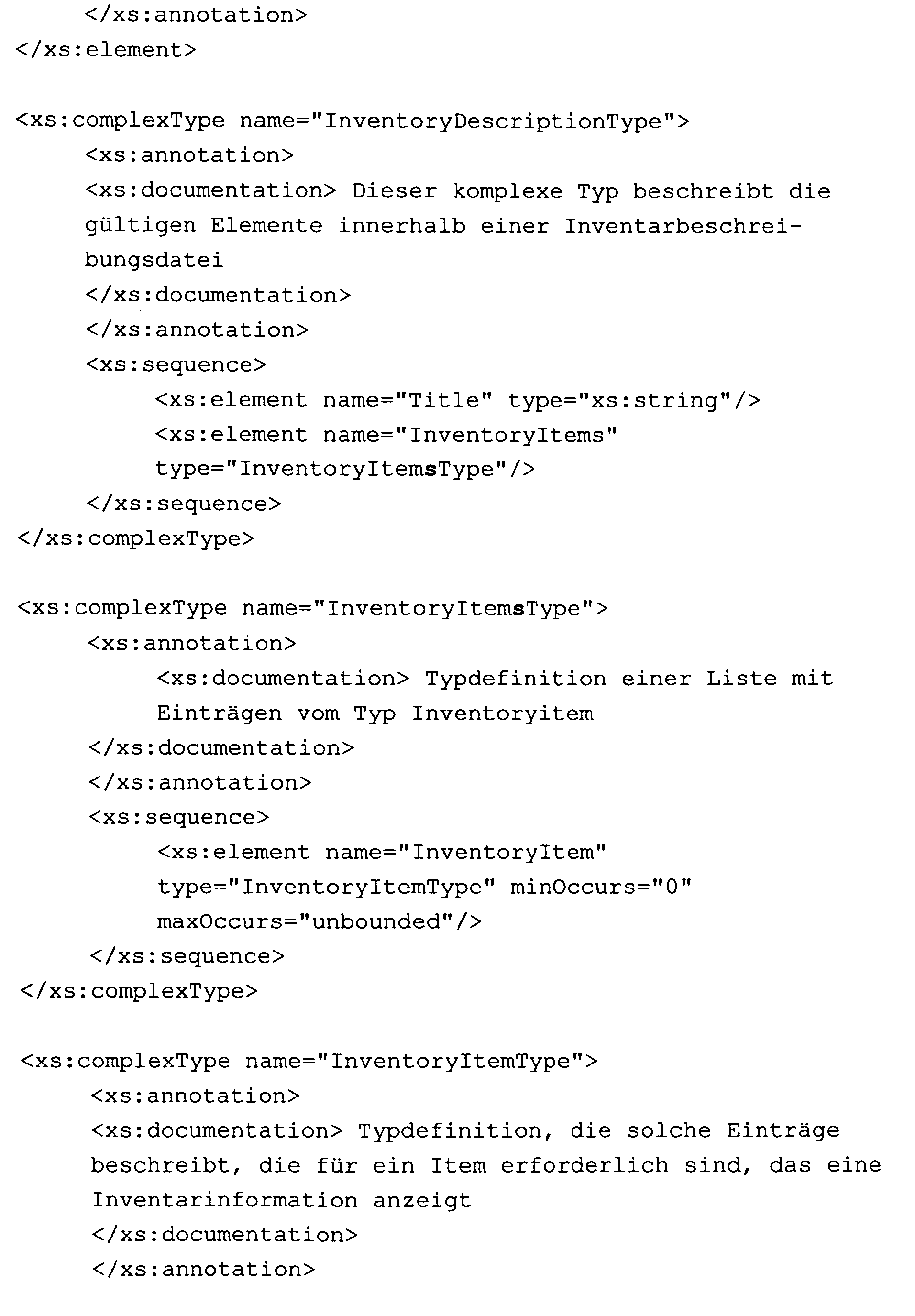

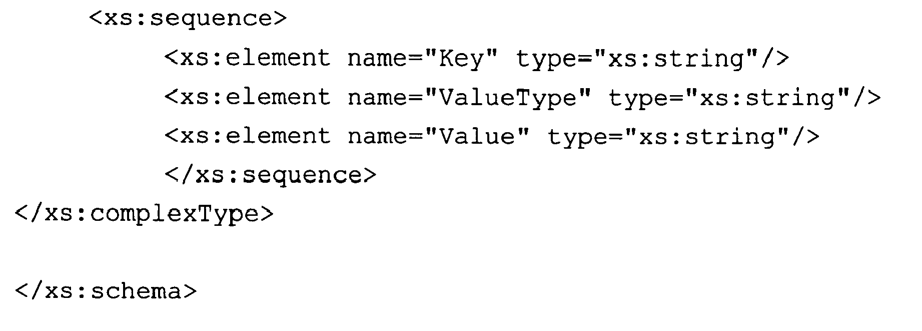

Bei einem alternativen Ausführungsbeispiel wird eine dem XML-Schema entsprechende DTD verwendet. An Stelle der im Beispiel angegebenen Typdefinitionen können die in den Typen spezifizierten Elemente auch direkt in die Datenstrukturen eingefügt werden. Die Verwendung von Typdefinitionen erleichtert bzw. vereinfacht die Angabe von Datenfelder einer Datenstruktur, da nicht der gesamte "Pfad" zu dem Datenfeld angegeben werden muss.

Im Folgenden ist ein Beispiel für die Inventardaten IB des Netzknotens B angegeben:

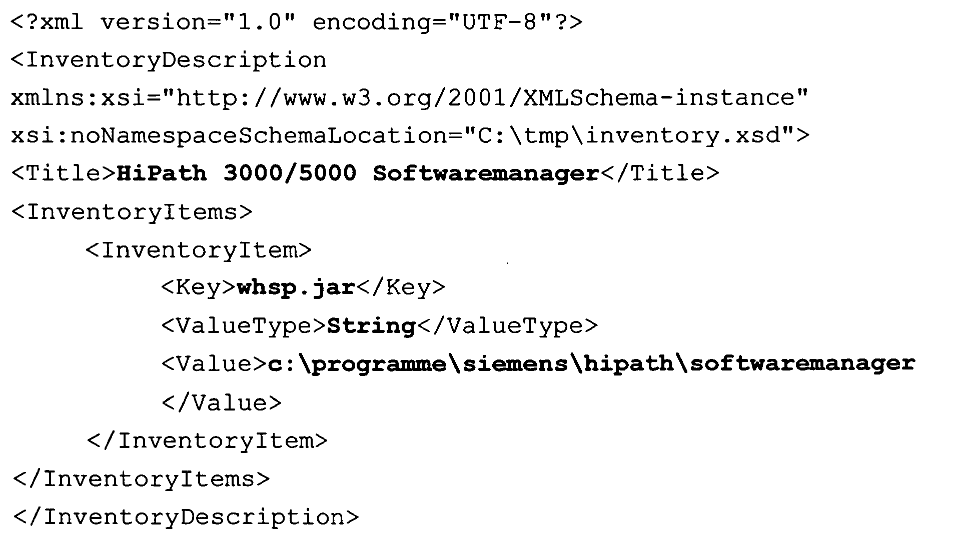

Gemäß dieser Festlegungen handelt es sich um einen Softwaremanager vom Typ "HiPath 3000/5000 Softwaremanager". Eine Datei, die Bestandteil dieses Softwaremanagers ist, liegt im Rechner B im Verzeichnis "c:\programme\siemens\hipath\softwaremanager" und hat den Dateinamen "whsp.jar". Im Ausführungsbeispiel handelt es sich um eine JAVA-Archivdatei.

Die Festlegungen erfüllen außerdem die Anforderungen des oben angegebenen XML-Schemas, auf das über die Angabe des Dateinamens "inventory.xsd" hingewiesen wird.

Im Folgenden ist ein Beispiel für die Inventardaten IC der Telekommunikationsanlage bzw. des Netzknotens C angegeben:

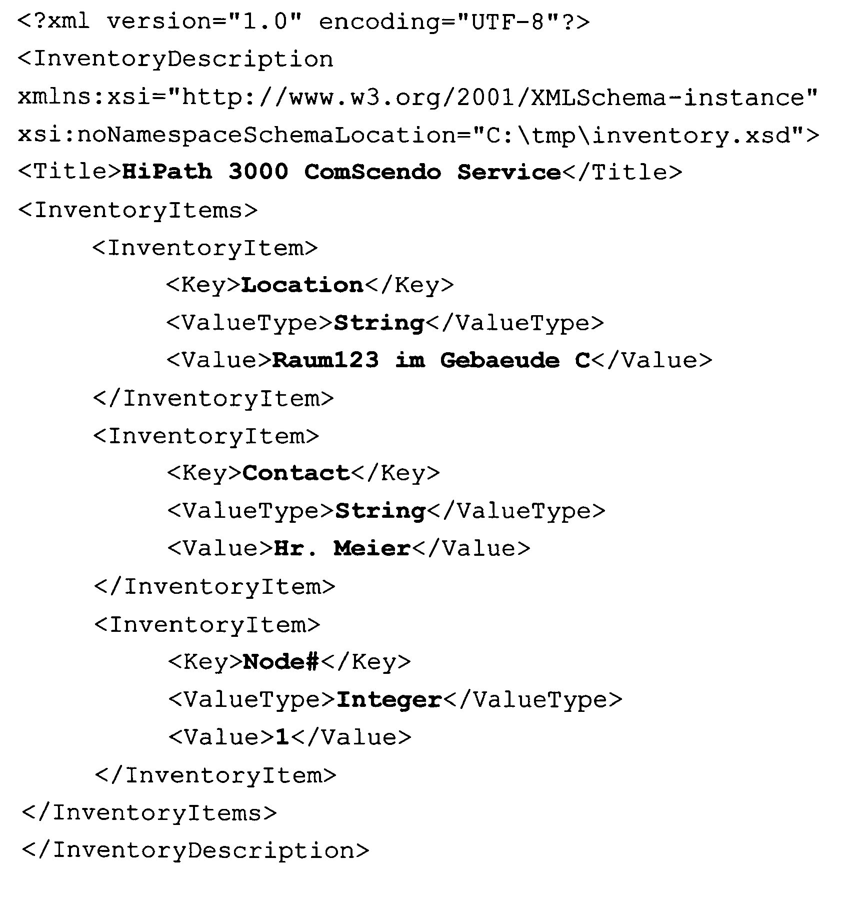

Gemäß dieser Festlegungen handelt es sich um eine Telekommunikationsanlage vom Typ "HiPath 3000 ComScendo Service", die im Gebäude C, Raum 123, steht. Die Telekommunikationsanlage wird von Hr. Meier betreut. Außerdem handelt es sich um den Knoten 1. Die Festlegungen erfüllen außerdem die Anforderungen des oben angegebenen XML-Schemas, auf das über die Angabe des Dateinamens "inventory.xsd" hingewiesen wird.

Figur 3 zeigt Funktionseinheiten des Netzknotens A, der zur Anzeige der Inventardaten ID verwendet wird. Der Netzknoten A enthält in einem Gehäuse 400 einen Prozessor 402, der Programmbefehle in einem Speicher 404 ausführt, siehe Schreib-Lese-Zugriffe über einen internen Bus 406. Im Speicher 404 ist beispielsweise der Befehlscode eines Datensichtprogramms bzw. Browsers 408 gespeichert, siehe gestrichelte Linie 410.

Der Netzknoten A enthält außerdem in dem Gehäuse 400 eine Ein-/Ausgabeeinheit 410, die über eine Übertragungsstrecke 414 mit einer Anzeigeeinheit 416 verbunden ist. Die Übertragungsstrecke 414 ist beispielsweise ein Kabel, eine Funkübertragungsstrecke oder eine Infrarotschnittstelle. Die Anzeigeeinheit 416 ist beispielsweise ein LCD (Liquid Crystal Display) oder ein Monitor mit einer Röhre.

An der Ein-/Ausgabeeinheit 414 ist über eine Übertragungsstrecke 418 eine Verbindung mit dem Internet 420 herstellbar. Die Übertragungsstrecke 418 ist beispielsweise ein Kabel oder eine Funkübertragungsstrecke.

In der Speichereinheit 404 werden im Ausführungsbeispiel auch die Inventardaten IA gespeichert. Zusätzlich werden die Inventardaten und das Datensichtprogramm 408 auch in einer nicht dargestellten Festwertspeichereinheit des Netzknotens A gespeichert.

Bei einem anderen Ausführungsbeispiel werden die Funktionseinheiten des Netzknotens A nur als Schaltung ohne einen Prozessor ausgeführt.

Durch die Erfindung lässt sich auf einfache Art das Bedürfnis erfüllen, einen Überblick über das Softwareinventar eines Rechners bzw. eines Rechnernetzwerkes zu erhalten. Auch die Softwareversionen dieser Netzkomponenten können erfasst und zur Anzeige gebracht werden. Neben den Informationen über den Softwarestand (Basisversion, Bugfixes etc.) sind zusätzlich noch Informationen über den Hardwareausbau und dynamische Zustandsinformationen, wie z.B. CPU- und Bufferauslastungen von Interesse. Diese Anforderungen existieren auch und insbesondere in einem heterogenen Netzwerk, das zusätzlich zu den PCs (Personalcomputer) z.B. noch aus embedded TK-Anlagen (Telekommunikationsanlage) besteht.

Ein Beispiel für ein solches heterogenes Netzwerk, welches zu inventarisieren ist, ist z.B. im Umfeld der HiPath 3000/5000 zu finden. Bei den HiPath 3000 Systemen handelt es sich um ein embedded System (PBX - Private Branch Exchange), bei der HiPath 5000 um einen Softswitch, der auf einem Standard-PC läuft. Weiterhin sind in diesem vernetzten Umfeld einige Applikationen und Services (Server und Clients) vertreten, die ebenfalls auf Standard-PCs (Personalcomputer) angesiedelt sein können, insbesondere auf zusätzlichen Standard-PCs . Die Anzahl der Komponenten in diesem Netz ist hoch und es ergeben sich häufig Abhängigkeiten, die durch die unterschiedlichen Softwareversionen verursacht werden, die zumeist gegenseitig inkompatibel sind.

Mit dem hier vorgestellten Verfahren ist es möglich, systemweit Inventory-Daten unter Verwendung einer gemeinsamen Technologie und einer standardisierten, insbesondere XML- basierten, Datenbeschreibung (im weiteren Inventory-XML) zu erhalten, ohne dafür speziell eine eigene Datenbank einzurichten und zu pflegen. Dieses Verfahren beruht darauf, die Inventory-Informationen direkt von der beteiligten Komponente zu erhalten, unabhängig von dem Wissen, wann eine Aktualisierung einer beliebigen Komponente stattgefunden hat - die Daten sind also immer aktuell.

Bei dem eingesetzten Verfahren müssen nicht verschiedene Technologien und proprietäre Schnittstellen verwendet werden, um Inventory-Daten zu sammeln. Das führt dazu, dass keine unterschiedliche Technologien vom Inventory-Viewer bedient werden müssen und dass in diesem Werkzeug alle Schnittstellen einheitlich zu bedienen und nur einheitliche Informationscontainer zu bewerten sind.

Ein wesentliches Unterscheidungsmerkmal zu anderen Lösungen ist es, dass keine Konfiguration der zu inventarisierenden Komponenten vorgenommen werden muss und dass die Daten nicht in einem zentralen Datenspeicher (meist eine Datenbank) gesichert werden. Das Inventarisieren von entfernten Komponenten kann bei anderen Verfahren nur nach einer expliziten Konfiguration (Angabe einer IP-Adresse, etc.) erfolgen, während es bei der Erfindung automatisch über die Verbundbeziehungen erfolgt.

Diesem Verfahren liegt bei einem Ausführungsbeispiel die Anwendung von P2P-Netzwerken (peer to peer) zu Grunde, die es ermöglichen, Daten lokal an einem Peer zu halten und auf diese trotzdem an allen anderen Stellen des P2P-Netzwerkes transparent zugreifen zu können. Dieses Verfahren funktioniert an allen Komponenten eines Systems, die über eine Netzwerkschnittstelle verfügen.

Der Inventory-Viewer ist ebenfalls Bestandteil dieses P2P Netzwerkes und kennt über einen geeigneten (automatisierten) Mechanismus alle übrigen Peers des Netzes. Über ein Kommando werden alle oder gezielte Peers aufgefordert, ihre Inventory Daten in der global gültigen Inventory-XML Beschreibung an den Viewer zu senden. Hier müssen die Informationen nur noch einmalig überarbeitet (geparsed) und zur Anzeige gebracht werden. Dabei kann man zwischen einer globalen Anfrage aller Daten oder einer, ebenfalls in Inventory-XML verfassten, Detailanfrage unterscheiden.

Durch die Verwendung von Inventory-XML können beliebige komponentenspezifische Daten transferiert werden und der Inventory-Viewer benötigt keine Kenntnisse über Spezifika dieser Daten mehr. Änderungen an den Daten dieser Komponente müssen im Viewer nun nicht mehr angepasst werden. Die einzige Forderung ist die, dass die Inventardaten der Inventory-XML Spezifikation genügen.

Dieses Verfahren hat weiterhin den Vorteil, als eine Art "Add-On" schrittweise in bestehende Infrastrukturen integriert werden zu können, da es die Benutzung von P2P Netzwerken und Inventory-XML bisher noch nicht gibt. Bereits vorhandene Inventarisierungsmechanismen werden jedoch nicht eingeschränkt und können im Einzelfall sogar zur Unterstützung von Inventory-XML erweitert werden.

Es wird ein eindeutiges Verfahren zum Zugriff auf Inventory-Daten ohne die Notwendigkeit eines zentralistischen Datenspeichers unter Verwendung einer einheitlichen Beschreibungssprache realisiert. Darüber hinaus erfolgt durch den P2P-Ansatz eine automatische Erkennung der am Inventory beteiligten verteilten Einheiten, die vom Viewer visualisiert werden sollen, ohne dass sie dafür explizit konfiguriert werden müssten. Jede Inventory Komponente kann, neben der Beantwortung spezieller Anfragen, selbst bestimmen/mitteilen, welche Informationen sie zur Verfügung stellt. Dadurch wird ein hoher Konfigurationsaufwand und Detailwissen "vor Ort" überflüssig.

## Patentansprüche

1. Verfahren zum Zugriff auf Inventardaten (IA bis IF), mit den Schritten:
Inbetriebnahme mehrerer Datenverarbeitungsanlagen (A bis F), für die Datenverarbeitungsanlagen (A bis F) jeweils Speichern von Inventardaten (IA bis IF), wobei die Inventardaten (IA bis IF) die jeweilige Datenverarbeitungsanlage (A bis F) beschreiben, und wobei die Inventardaten (IA bis IF) die Datenverarbeitungsanlagen (A bis F) auf die gleiche Art und Weise beschreiben,
Betreiben der Datenverarbeitungsanlagen (A bis F) in einem Verbundsystem gemäß einer Verbundbetriebsart, die für die Datenverarbeitungsanlagen (A bis F) des Verbunds jeweils einen Zugriff auf die Inventardaten (IA bis IF) anderer Datenverarbeitungsanlagen (A bis F) des Verbundes (10) ermöglicht,
Anfordern von Inventardaten (ID) mindestens einer Datenverarbeitungsanlage (D) des Verbundes (10),
Übertragen der angeforderten Inventardaten (ID) gemäß der Verbundbetriebsart über ein Datenübertragungsnetz,
Ausgeben der übertragenen Inventardaten (ID).

2. Verfahren nach Anspruch 1, **dadurch gekennzeichnet, dass** mindestens zwei Datenverarbeitungsanlagen (E, D) voneinander verschiedene Betriebssysteme haben.

3. Verfahren nach Anspruch 1 oder 2, **dadurch gekennzeichnet, dass** die Inventardaten auf den Datenverarbeitungsanlagen lokal durch lokale Inventardatensammelprogramme zusammengestellt werden,
wobei vorzugsweise die Inventardaten entweder in ihrem Format umgewandelt werden oder wobei die Inventardaten bereits vor dem Sammeln in dem Format gespeichert sind, in dem die Inventardaten (IA bis IF) die Datenverarbeitungsanlagen (A bis F) auf die gleiche Art und Weise beschreiben.

4. Verfahren nach einem der vorhergehenden Ansprüche, **dadurch gekennzeichnet, dass** die Verbundbetriebsart des Verbundes (10) eine Peer-to-Peer-Betriebsart ist.

5. Verfahren nach einem der vorhergehenden Ansprüche, **dadurch gekennzeichnet, dass** beim Eingliedern einer Datenverarbeitungsanlage (F) in den Verbund (10) gemäß der Verbundbetriebsart mindestens eine Anfragenachricht an eine oder mehrere Datenverarbeitungsanlagen (A bis F) des Datenübertragungsnetzes gesendet wird,
wobei die Anfragenachricht ein Typdatum enthält, das auf eine Datenverarbeitungsanlage (A bis F) mit Inventardaten (IA bis IF) hinweist.

6. Verfahren nach einem der vorhergehenden Ansprüche, **gekennzeichnet durch** den Schritt:
Verhindern des Änderns der Inventardaten (IA bis IF), die als Kopiervorlage für die übertragenen Inventardaten (IA bis IF) dienten.

7. Verfahren nach einem der vorhergehenden Ansprüche, **dadurch gekennzeichnet, dass** ausgewählte Inventardaten (ID) angefordert werden,
oder dass alle Inventardaten (IA bis IF) angefordert werden, die auf den Datenverarbeitungsanlagen (A bis F) des Verbundes (10) gespeichert sind.

8. Verfahren nach einem der vorhergehenden Ansprüche, **dadurch gekennzeichnet, dass** die Art und Weise der Beschreibung der Inventardaten (IA bis IF) gemäß einer erweiterbaren Datenbeschreibungssprache vorgegeben ist, insbesondere gemäß der Beschreibungssprache XML.

9. Verfahren nach Anspruch 8, **dadurch gekennzeichnet, dass** ein Parserprogramm die Inventardaten einer Datenverarbeitungsanlage oder aller Datenverarbeitungsanlagen (A bis F) des Verbundes (10) auf die Einhaltung der Vorgaben hin überprüft, insbesondere nach deren Übertragung über das Datenübertragungsnetz.

10. Verfahren nach einem der vorhergehenden Ansprüche, **dadurch gekennzeichnet, dass** mindestens eine Datenverarbeitungsanlage (B) des Verbundes (10) ein Personalcomputer ist, und/oder durch mindestens eine Datenverarbeitungsanlage (C) des Verbundes (10) eine Telekommunikationsanlage (C) eines durchschaltevermittelten Datenübertragungsnetzes oder eine Vermittlungsstelle eines durchschaltevermittelten Datenübertragungsnetzes oder eine Netzzugangseinheit eines Datenpaketübertragungsnetzes ist.

11. Vorrichtung (400, A) zum Zugriff auf Inventardaten (IA bis IF), mit
einer Anforderungseinheit (412), die Inventardaten (IA bis IF) mindestens einer anderen Datenverarbeitungsanlage (A bis F) eines Verbundes (10) gemäß einer Verbundbetriebsart anfordert, die für die Datenverarbeitungsanlagen (A bis F) des Verbundes (10) jeweils einen Zugriff auf die Inventardaten (IA bis IF) anderer Datenverarbeitungsanlagen (A bis F) des Verbundes (10) ermöglicht,
einer Empfangseinheit (412), die die angeforderten Inventardaten (IA bis IF) aus einem Datenpaketübertragungsnetz empfängt,
und mit einer Ausgabeeinheit (416), die die empfangenen Inventardaten (IA bis IF) in einer für einen Nutzer der Vorrichtung (400) lesbaren Form ausgibt.

12. Vorrichtung (400) nach Anspruch 11, **dadurch gekennzeichnet, dass** die Vorrichtung (400) mindestens eine Einheit enthält, die einen Verfahrensschritt nach einem der Ansprüche 1 bis 8 durchführt,
und/oder dass die Vorrichtung (400) Bestandteil eines Verbundes (10) nach einem der Ansprüche 1 bis 10 ist.
